# EUROPÄISCHE PATENTSCHRIFT

(11) **EP 0 747 429 B1**
(45) Veröffentlichungstag und Bekanntmachung des Hinweises auf die Patenterteilung: **17.02.1999**
(21) Anmeldenummer: 96108299.7
(22) Anmeldetag: 24.05.1996
(51) Int. Cl.: C08L 21/00

(54) **Kautschukmischungen enthaltend schwefelhaltige Polyester**
Rubber compositions containing sulfur-containing polyesters
Compositions de caoutchouc contenant des polyesters contenant du soufre

(30) Priorität: 06.06.1995 DE 19520598
(43) Veröffentlichungstag der Anmeldung: 11.12.1996
(73) Patentinhaber: BAYER AG, 51368 Leverkusen (DE)
(72) Erfinder: Scholl, Thomas, Dr., 51469 Bergisch Gladbach (DE); Weidenhaupt, Hermann-Josef, Dr., 50259 Pulheim (DE); Eisele, Ulrich, Dr., 51375 Leverkusen (DE)

(56) Entgegenhaltungen:
- GB-A- 1 090 267
- US-A- 3 459 787
- US-A- 3 564 076

## Beschreibung

Gegenstand der vorliegenden Erfindung sind neue Kautschukmischungen, die u.a. schwefelhaltige Polyester enthalten. Die neuen Kautschukmischungen eignen sich hervorragend zur Herstellung von Kautschukvulkanisaten mit guten mechanischen Eigenschaften und gutem Hystereseverhalten. Die Kautschukvulkanisate dienen insbesondere zur Herstellung von rollwiderstandsarmen Reifen mit guter Naßrutschfestigkeit und guter Abriebfestigkeit.

Vulkanisate mit verbessertem Hystereseverhalten sind zwar bekannt, sie besitzen jedoch einige unerwünschte Eigenschaften. So werden in der EP 253 365 Hystereseverbesserer auf Basis bestimmter Nitroamine beschrieben. Wegen der Gefahr der Umnitrosierung besteht jedoch der Wunsch nach Kautschukhilfsmitteln, die frei von Nitro- und Nitrosogruppen sind. Ähnliche Bedenken bestehen auch bei den Nitrosoanilinen der US-PS 4 690 965. Aus der EP 366 952 sind weiterhin Kautschukvulkanisate bekannt mit verringerten Hystereseverlusten, die bestimmte Diphenylsulfide enthalten. Nachteilig ist, daß diese Additive in Naturkautschuk unwirksam sind und ihn darüber hinaus auch noch abbauen (siehe hierzu US-PS 2 470 948). In DE-OS 2 141 159, 2 141 160 und 2 255 577 sind bestimmte Organosilane als Verstärkungsadditive insbesondere für kieselsäurehaltige Kautschukvulkanisate beschrieben. Auch die EP-A 447 066 beschreibt den Einsatz dieser Organosilane zur Herstellung von Kieselsäure-gefüllten Reifenlaufflächen. Durch die Kombination von Kieselsäure-Füllstoff und Organosilan gelang es, den Rollwiderstand des Reifens zu verringern, ohne, wie sonst üblich, die Abriebfestigkeit und die Naßrutschfestigkeit zu verschlechtern.

Es wurde jetzt überraschend gefunden, daß sich durch die Verwendung der erfindungsgemäßen schwefelhaltigen Polyester Vulkanisate mit erheblich verbessertem dynamischem Dämpfungsverhalten, guten Festigkeitseigenschaften und gutem Abriebswiderstand herstellen lassen. Die S-haltigen Polyester vernetzen die Kautschukketten während der Vulkanisation mit -S-Y-S-Brücken (Y = z.B. Alkyl), die im Vergleich zu polysulfidischen Brücken unter thermischer und dynamischer Belastung sehr stabil sind, so daß sich hieraus die Möglichkeit ergibt, Gummiartikel in kürzerer Zeit bei höherer Temperatur herzustellen. Die Herstellung der erfindungsgemäßen schwefelhaltigen Polyester erfordert keine teuren Silanrohstoffe, so daß sich im praktischen Einsatz Kostenvorteile ergeben. Darüber hinaus sind die erfindungsgemäßen Polyester nicht wie Verstärkungsadditive auf Silanbasis bevorzugt auf die Verwendung von Kieselsäure angewiesen, sondern funktionieren unabhängig vom Füllstoff auch in rußgefüllten Kautschukmischungen.

Gegenstand der vorliegenden Erfindung sind daher Kautschukmischungen enthaltend mindestens einen Kautschuk, einen Füllstoff, gegebenenfalls weitere Kautschukhilfsmittel sowie mindestens einen schwefelhaltigen Polyester mit Struktureinheiten der allgemeinen Formel (I) 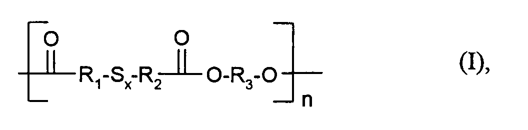 wobei
- die Reste R₁ und R₂: gleich oder verschieden sind und für unverzweigte oder verzweigte, gegebenenfalls substituierte C₁-C₁₂-Alkylenreste stehen,
- R₃: einen gegebenenfalls substituierten, unverzweigten oder verzweigten C₁-C₃₆-Alkylenrest, der gegebenenfalls durch Sauerstoff-, Schwefel- oder Stickstoffatome unterbrochen sein kann, oder C₇-C₃₆-Alkylarylenrest darstellt,
- x: für eine ganze Zahl von 2 bis 6 und
- n: für eine ganze Zahl von 2 bis 100 stehen,
in Mengen von 0,05 bis 15 Gew.-%, bevorzugt 0,1 bis 10 Gew.-%, bezogen auf jeweils eingesetzte Gewichtsmenge an Kautschuk.

Als Substituenten der obengenannten Reste R₁ bis R₃ kommen insbesondere in Frage: OH, OC₁-C₁₂-Alkyl, CO₂-C₁-C₁₂-Alkyl, C₆-C₁₂-Aryl oder Halogen. Besonders bevorzugt werden als Substituenten genannt: OH, OCH₃, OC₂H₅, OC₃H₇, CO₂CH₃, CO₂C₂H₅, CO₂C₄H₉, C₆H₅, Cl.

Als Reste R₁ und R₂ werden bevorzugt genannt:

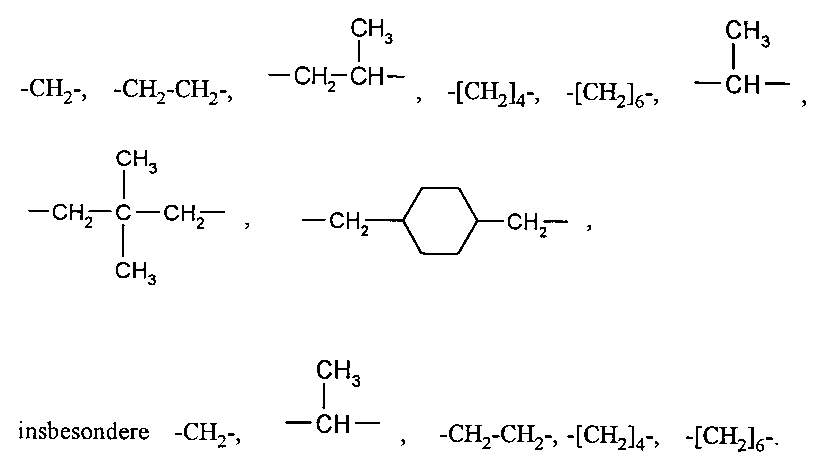

Als Alkylenreste R₃ kommen insbesondere in Frage: 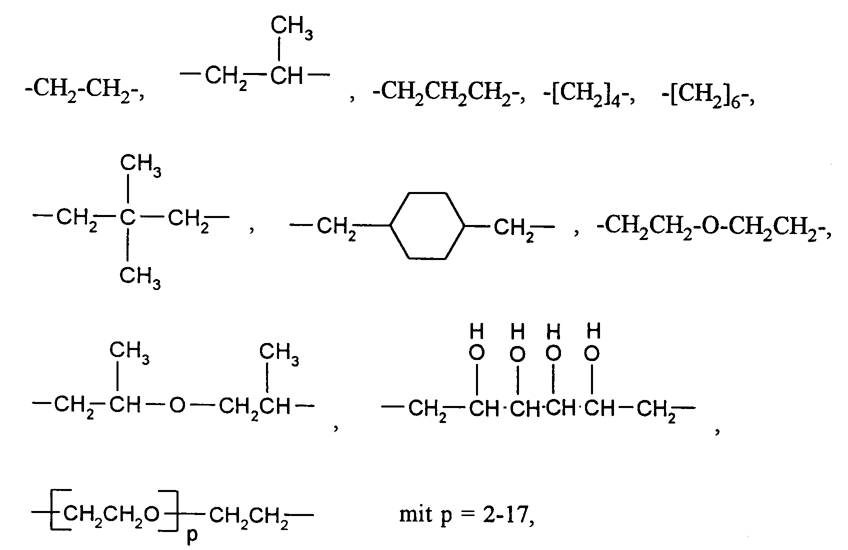 ganz besonders bevorzugt 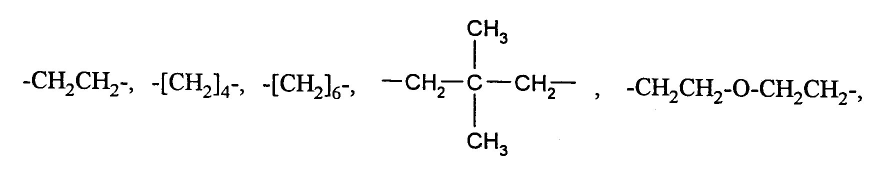 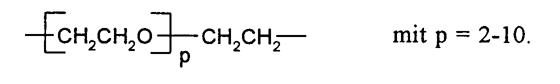 mit p = 2-10.

Als Alkylarylenreste sind bevorzugt 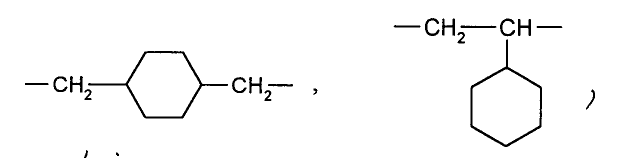 wobei x für eine ganze Zahl von 2 bis 6 steht und n für eine ganze Zahl von 2 bis 20.

Die erfindungsgemäß einzusetzenden Polyester mit Struktureinheiten der Formel (I) besitzen mittlere Molgewichte (Gewichtsmittel) von 400 bis 20 000 und stellen je nach Molekulargewicht und Struktur Öle oder Festsubstanzen dar.

Die Herstellung der erfindungsgemäßen schwefelhaltigen Polyester kann z.B. durch Veresterung von Polythio(bisalkylcarbonsäuren) mit Polyalkoholen unter Wasserabspaltung oder durch Umesterung von Polythio(bisalkylcarbonsäureestern) mit Polyalkoholen erfolgen. Die Herstellung der Polythio(bisalkylcarbonsäuren) erfolgt z.B. durch Umsetzung von Mercaptoalkylcarbonsäuren mit Schwefeldichlorid oder Dischwefeldichlorid unter HCl-Abspaltung. Die Herstellung der Dicarbonsäuren nach diesem Verfahren ist in der deutschen Patentanmeldung P 4 038 000 beschrieben.

Die Herstellung der schwefelhaltigen Polyester aus Polythio(bisalkylcarbonsäuren) und Polyalkoholen erfolgt bevorzugt bei Temperaturen von 60 bis 140°C in einem geeigneten Lösungsmittel, wie z.B. Cyclohexan, Benzol, Toluol und/oder Xylol, unter Wasserabscheidung. Zur Reaktionsbeschleunigung werden bevorzugt saure Katalysatoren wie p-Toluolsulfonsäure, wie sie für Ver- und Umesterungsreaktionen allgemein bekannt sind, eingesetzt. Dabei wird die Katalysatormenge möglichst gering gehalten (bevorzugt unter 0,5 %, bezogen auf Endprodukt). Die Molverhältnisse der Dicarbonsäure zu Polyalkohole sollten etwa bei 1:0,5 bis 1:1,5 liegen.

Die schwefelhaltigen Polyester können auch durch die Verwendung von mehr als zweiwertigen Alkoholen hergestellt werden. Zur Vermeidung von Vernetzungen, die die Wirksamkeit der Produkte beeinträchtigen könnten, sollten die Polyalkohole zwei primäre Hydroxylfunktionen besitzen, die naturgemäß bevorzugt mit den Carboxylgruppen reagieren. Aber auch Polyalkohole mit drei oder mehr primären Hydroxylfunktionen sind für die Veresterung geeignet und führen zu verzweigten Polyestern. Vernetzungen, die zur Unlöslichkeit des Polyesters führen, sind jedoch zu vermeiden. Ferner können monofunktionelle Alokohole, wie Methanol, Ethanol, Butanol, Hexanol, Ethylhexylalkohol und dergleichen als Kettenabbrecher mitverwendet werden. Hierbei sollten Mengen von 30 Mol-%, bezogen auf Polyalkohol, nicht überschritten werden.

Bevorzugte Dicarbonsäuren sind z.B. 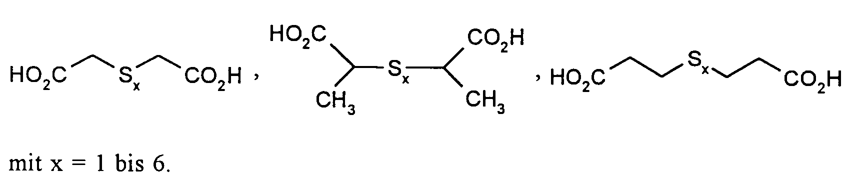 mit x = 1 bis 6.

Bevorzugte Diole sind z.B. Ethylenglykol, Diethylenglykol, Tetraethylenglykol, 1,2-Propandiol, 1,3-Propandiol, 1,2-Butandiol, 1,3-Butandiol, 1,4-Butandiol, 2,3-Butandiol, 2,2-Dimethyl-1,3-propandiol, 1,5-Pentandiol, 1,6-Hexandiol, 2,5-Hexandiol, 2-Methyl-2-propyl-1,3-propandiol, 2,2-Diethyl-1,3-propandiol, 2-Ethyl-1,3-hexandiol, 1,12-Octadecandiol und/oder 1,4-Cyclohexandimethanol.

Geeignete mehrwertige Alkohole sind z.B. Glycerin, Trimethylolpropan, Pentaerythrit, Xylit und/oder Sorbit.

Bei der Herstellung der erfindungsgemäßen Kautschukmischungen erfolgte die Zugabe der erfindungsgemäßen schwefelhaltigen Polyester mit Struktureinheiten der Formel (I) zum Kautschuk sowie die Zugabe der Füllstoffe entweder im ersten Teil des Mischprozesses bei Massetemperaturen von 100 bis 200°C oder gegebenenfalls später bei tieferen Temperaturen (ca. 40 bis 100°C) z.B. zusammen mit Vernetzungsmitteln und gegebenenfalls Beschleunigern und an deren Kautschukhilfsmitteln.

Die erfindungsgemäßen schwefelhaltigen Polyester mit Struktureinheiten (I) können sowohl in reiner Form als auch aufgezogen auf einen inerten, organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen und -vulkanisate beispielsweise in Frage:
- Hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 100 bis 400 nm. Die Kieselsäuren können gegebenenfalls auch als Mischoxide mit anderen Metalloxiden, wie Al-, Mg-, Ca-, Ba-, Zn-, Zr-, Ti-oxiden, vorliegen.
- Synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt werden hochdisperse Kieselsäuren, hergestellt durch Fällung von Lösungen von Silikaten mit BET-Oberflächen von 20 bis 400 m²/g in Mengen von 5 bis 150 Gew.-Teilen, bezogen auf 100 Teile Kautschuk, eingesetzt.

Als Füllstoffe können natürlich auch ohne weiteres Ruße verwendet werden. Die hierbei zu verwendenden Ruße sind nach dem Flammruß-, Furnace- oder Gasrußverfahren hergestellt und besitzen BET-Oberflächen von 20 bis 200 m²/g, wie z.B. SAF-, ISAF-, IISAF-, HAAF-, FEF- oder GPF-Ruße.

Die genannten Füllstoffe können alleine oder im Gemisch eingesetzt werden, bevorzugt in Mengen von 10 bis 250 Gew.-Teilen, bezogen auf eingesetzte Menge an Kautschuk. In einer besonders bevorzugten Ausführung werden 10 bis 150 Gew.-Teile helle Füllstoffe, zusammen mit 0 bis 100 Gew.-Teilen Ruß, sowie 0,3 bis 15 Gew.-Teile eines Polyesters mit Struktureinheiten (I), jeweils bezogen auf eingesetzten Kautschuk, sowie weitere Kautschukhilfsmittel zur Herstellung der Vulkanisate eingesetzt. Ganz besonders bevorzugt ist hierbei der Einsatz von 0,3 bis 10 Gew.-% des Polyesters der Formel (I).

Für die Herstellung erfindungsgemäßer Kautschukvulkanisate eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.
- BR: - Polybutadien
- ABR: - Butadien/Acrylsäure-C₁-C₄-alkylester-Copolymere
- CR: - Polychloropren
- IR: - Polyisopren
- SBR: - Styrol/Butadien-Copolymerisate mit Styrolgehalten von 1 bis 60, vorzugsweise 20 bis 50 Gew.-%
- IIR: - Isobutylen/Isopren-Copolymerisate
- NBR: - Butadien/Acrylnitril-Copolymere mit Acrylnitrilgehalten von 5 bis 60, vorzugsweise 10 bis 50 Gew.-%
- HNBR: - teilhydrierter oder vollständig hydrierter NBR-Kautschuk
- EPDM: - Ethylen/Propylen/Dien-Copolymerisate
sowie Mischungen dieser Kautschuke. Für die Herstellung von Kfz-Reifen sind insbesondere anionisch polymerisierte L-SBR-Kautschuke mit einer Glastemperatur oberhalb von -50°C, die gegebenenfalls m it Silylethern oder anderen funktionellen Gruppen, modifiziert sein können, wie sie z.B. in der EP-A 447 066 beschrieben sind, sowie deren Mischungen mit Dienkautschuken von Interesse.

Die erfindungsgemäßen Kautschukvulkanisate können weitere Kautschukhilfsmittel enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Bis-(triethoxysilypropyl)-tetrasulfid, Triethanolamin, Polyethylenglykol, Hexantriol, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1 bis 50 Gew.-%, bezogen auf eingesetzten Kautschuk.

Als weitere Kautschukhilfsmittel werden Vernetzungsmittel eingesetzt, z.B. Peroxide, Schwefel, Magnesiumoxid, Zinkoxid, denen noch die bekannten Vulkaniationsbeschleuniger, wie Mercaptobenzthiazole, -sulfenamide, Thiurame und Thiocarbonate, zugegeben werden können. Bevorzugt ist Schwefel. Die Vernetzungsmittel und Vernetzungsbeschleuniger werden jeweils in Mengen von 0,1 bis 10 Gew.-%, bevorzugt 0,1 bis 5 Gew.-%, bezogen auf eingesetzten Kautschuk, eingesetzt.

Die Vulkanisation kann bei Temperaturen von 100 bis 200°C, bevorzugt 130 bis 180°C, gegebenenfalls unter Druck von 10 bis 200 bar, erfolgen.

Die Abmischung der Kautschuke mit dem Füllstoff und den erfindungsgemäßen Polyestern (I) kann in üblichen Mischaggregaten, wie Walzen, Innenmischern und Mischextrudern, durchgeführt werden.

Die erfindungsgemäßen Kautschukvulkanisate eignen sich zur Herstellung von Formkörpern der verschiedensten Art, z.B. für die Herstellung von Kabelmänteln, Schläuchen, Treibriemen, Förderbändern, Walzenbelägen, Reifen, Schuhsohlen, Dichtungsringen und Fämpfungselementen, insbesondere für die Herstellung von Reifen.

### Beispiele

### Beispiel A 1

### Herstellung von

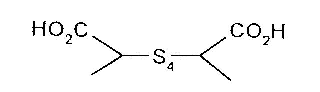

424 g (4 Mol) 2-Mercaptopropionsäure in 2 l Toluol wurden bei 5 bis 10°C innerhalb von 3 Stunden mit 270 g (2 Mol) Dischwefeldichlorid versetzt. Man ließ ca. 10 Stunden bei Raumtemperatur nachrühren und filtrierte anschließend ab. Nach gründlicher Wasche mit Toluol wurden 438 g der Dicarbonsäure in Form weißer Kristalle mit dem Fp. 80 bis 85°C erhalten.
¹H-NMR (D6-DMSO): 1,4 bis 1,5 ppm (Multiplett, 6 CH₃-Protonen); 3,7 bis 4,0 ppm (Multiplett, 2 CH-Protonen).

### Beispiel A2

### Herstellung von HO₂C-CH₂-S₄-CH₂-CO₂H

276 g (3 Mol) Thioglykolsäure wurden gemäß dem Verfahren aus Beispiel A1 mit 202,5 g (1,5 Mol) Dischwefeldichlorid umgesetzt. Man erhielt 324,5 g eines farblosen Pulvers mit dem Fp. 103 bis 106°C.

### Beispiel B1

### Herstellung des Polyesters

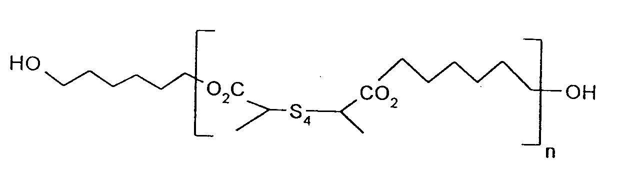

274 g (1 Mol) der Dicarbonsäure aus Beispiel A1 wurden mit 123,9 g (1,05 Mol) 1,6-Hexandiol mit 0,1 g p-Toluolsulfonsäure am Wasserabscheider gekocht. Nachdem das Reaktionswasser entfernt wurde, destillierte man das Lösungsmittel erst unter Normaldruck, später im Vakuum ab, so daß 120°C nicht überschritten wurden. Man erhielt 362 g eines hellgelben zähen Öls. Mittleres Molgewicht (Gewichtsmittel) bestimmt durch Gelpermeationschromatographie: 5.200.

### Beispiel B2

### Herstellung des Polyesters

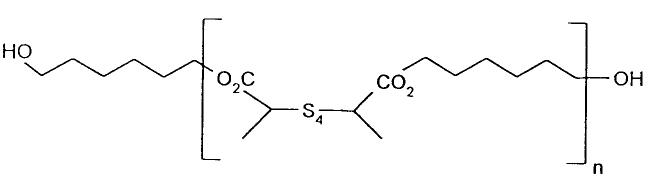

Es wurden 210 g der Dicarbonsäure aus Beispiel A1 und 123,9 g 1,6-Hexandiol, 0,1 g p-Toluolsulfonsäure in 400 ml Toluol gemäß dem Verfahrens des Beispiels B1 umgesetzt. Man erhielt 301 g eines viskosen hellgelben Öls. Mittleres Molgewicht (Gewichtsmittel) nach Gelpermeationschromatographie: 2.400.
Elementaranalyse: C: 42,8 %, H: 6,5 %, S: 32,3 %, Viskosität (23°C): 7,1 Pa·sec.

### Beispiel B3

### Herstellung des Polyesters

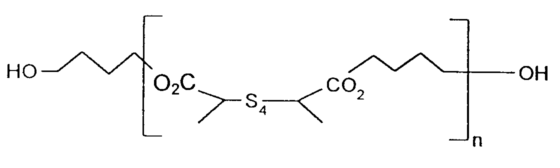

137 g (0,5 Mol) der Dicarbonsäure aus Beispiel A1 wurden mit 49,5 g (0,55 Mol) 1,4-Butandiol sowie 0,1 g p-Toluolsulfonsäure in 300 ml Toluol am Wasserabscheider gekocht. Nachdem das Reaktionswasser entfernt wurde, destillierte man das Lösungsmittel erst unter Normaldruck, später im Vakuum ab, so daß die Temperatur unterhalb 120°C blieb. Man erhielt 169 g eines hellgelben zähen Öls.

### Beispiel B4

### Herstellung des Polyesters

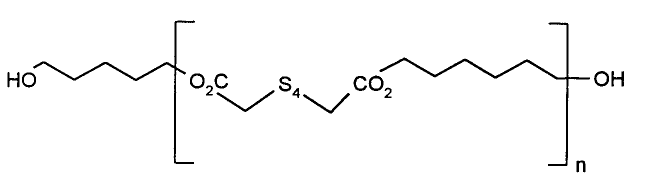

Analog dem Verfahren aus Beispiel B1 wurden 123,0 g (0,5 Mol) der Dicarbonsäure A2 mit 64,9 g (0,55 Mol) 1,6-Hexandiol und 0,1 g pTs in 300 ml Toluol umgesetzt. Nach ca. 3-stündigem Entfernen des Reaktionswassers wurden 172,5 g eines gelben viskosen Öls erhalten. Mittleres Molgewicht (Gewichtsmittel) bestimmt durch Gelpermeationschromatographie: 3.300.

### Beispiele C1 bis C3

Die folgenden Kautschukmischungen wurden bei 140°C in einem 1,5 l Kneter hergestellt. Nach dem Erkalten wurde der Knetvorgang bei derselben Temperatur noch einmal wiederholt. Anschließend wurden Schwefel und Beschleuniger (Diphenylguanidin, N-Cyclohexylmercaptobenzthiazolsulfenamid und Tetramethylthiuramdisulfid) bei 60 bis 80° auf der Walze zugemischt. Die Kautschukmischungen wurden daraufhin 45 Minuten bei 160°C vulkanisiert.

**Tabelle 1**

| | C1 | C2 | C3 |
|---|---|---|---|
| S-SBR (Buna VSL 1954 S 25; Bayer) | 25 | 25 | 25 |
| Kieselsäure (Vulkasil S; Bayer) | 80 | 80 | 80 |
| ZnO | 2,5 | 2,5 | 2,5 |
| Stearinsäure | 1 | 1 | 1 |
| Ruß (Corax N 339, Degussa) | 6 | 6 | 6 |
| aromatisches Öl | 32,5 | 32,5 | 32,5 |
| Antioxidans 1 (Vulkanox HS; Bayer) | 1 | 1 | 1 |
| Antioxidans 2 (Vulkanox 4020; Bayer) | 1 | 1 | 1 |
| Ozonschutzwachs (Antilux 654, Rheinchemie) | 1,5 | 1,5 | 1,5 |
| Bis-(triethoxysilylpropyl)-tetrasulfid (Si 69, Degussa) | 6,5 | 0 | 0 |
| Polyester gemäß Beispiel B2 | 0 | 6,5 | 0 |
| Polyester gemäß Beispiel B4 | 0 | 0 | 6,5 |
| Diphenylguanidin (Vulkacit DPG; Bayer) | 2 | 2 | 0 |
| N-Cyclohexyl-mercaptobenzthiazolsulfenamid (Vulkacit CZ; Bayer) | 1,5 | 1,5 | 1,5 |
| Tetramethylthiuramdisulfid | 0 | 0 | 0,4 |
| Schwefel | 2 | 2 | 2 |
| Spannungswert bei 100 % Dehnung (MPa) | 2,9 | 3,0 | 3,7 |
| Festigkeit (MPa) | 20,6 | 16,7 | 15,7 |
| Bruchdehnung (%) | 496 | 617 | 529 |
| Härte bei 23°C (Shore A) | 72 | 75 | 80 |
| Härte bei 70°C (Shore A) | 68 | 75 | 81 |
| tan delta bei 60°C | 0,135 | 0,092 | 0,095 |
| Abrieb DIN 53 516 (mm³) | 80 | 75 | 27 |
| Temperaturerhöhung (°C) | 30 | 23 | 24 |

Die Meßergebnisse machen deutlich, daß mit Hilfe der erfindungsgemäßen Polyester erhebliche Verbesserungen des dynamischen Dämpfungsverhaltens erzielt werden. So wird der tan delta bei 60°C, der mit einem geringeren Rollwiderstand des Reifens korreliert, um ca. 30 % gesenkt. Die Temperaturerhöhung bei dynamischer Belastung, gemessen im Goodrich Flexometer, ist dementsprechend deutlich geringer als bei der Referenzprobe, die mit einem herkömmlichen Silan-Füllstoffaktivator ((Bis-triethoxysilylpropyl)-tetrasulfid) vulkanisiert wurde.

### Beispiel C4 bis C6

Die nachfolgenden Kautschukmischungen wurden in einem 1,5 l Kneter bei 130 bis 140°C hergestellt. Anschließend wurden Schwefel, Beschleuniger (Tetramethylthiuramdisulfid und N-Cyclohexyl-mercaptobenzthiazol) und ein Polyester gemäß Beispiel B4 auf der Walze bei 60 bis 80°C nachgemischt. Die Vulkanisation erfolgte in 30 Minuten bei 160°C.

**Tabelle 2**

| | C4 | C5 | C6 |
|---|---|---|---|
| E-SBR (Buna EM 1500; Hüls) | 70 | 70 | 70 |
| E-SBR (Buna EM 1778; Hüls) | 41 | 41 | 41 |
| Kieselsäure (Vulkasil S; Bayer) | 50 | 50 | 50 |
| Zinkoxid | 3 | 3 | 3 |
| Stearinsäure | 2 | 2 | 2 |
| Diethylenglykol | 1,5 | 1,5 | 1,5 |
| Cumaronharz | 5 | 5 | 5 |
| Bis-(triethoxysilylpropyl)-tetrasulfid | 0 | 3,5 | 0 |
| Schwefel | 2 | 2 | 2 |
| N-Cydohexyl-mercaptobenzthiazolsulfenamid | 1,5 | 1,5 | 1,5 |
| Tetramethylthiuramdisulfid | 0,1 | 0,1 | 0,1 |
| Polyester gemäß Beispiel B4 | 0 | 0 | 6 |
| Spannungswert bei 100 % Dehnung (MPa) | 1,1 | 2,2 | 2,1 |
| Festigkeit (MPa) | 15,6 | 19,2 | 14,8 |
| Bruchdehnung (%) | 855 | 561 | 596 |
| Härte bei 23°C (Shore A) | 58 | 67 | 68 |
| Härte bei 70°C (Shore A) | 52 | 64 | 64 |
| tan delta bei 60°C | 0,15 | 0,1 | 0,072 |
| Abrieb DIN 53 516 (mm³) | 248 | 116 | 109 |

Auch die Prüfergebnisse dieser E-SBR-Vulkanisate belegen, daß die erfindungsgemäßen Polyester überraschende und deutliche Verbesserungen im dynamischen Dämpfungsverhalten und im Abriebsverhalten bewirken.

## Patentansprüche

1. Kautschukmischungen enthaltend mindestens einen Kautschuk, einen Füllstoff, gegebenenfalls weitere Kautschukhilfsmittel sowie mindestens einen schwefelhaltigen Polyester mit Struktureinheiten der allgemeinen Formel (I) 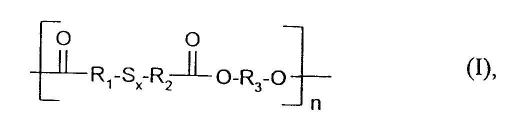 wobei
die Reste R₁ und R₂ gleich oder verschieden sind und für unverzweigte oder verzweigte, gegebenenfalls substituierte C₁-C₁₂-Alkylenreste stehen,
R₃ einen gegebenenfalls substituierten, unverzweigten oder verzweigten C₁-C₃₆-Alkylenrest-, der gegebenenfalls durch Sauerstoff-, Schwefel- oder Stickstoffatome unterbrochen sein kann, oder C₇-C₃₆-Alkylarylenrest darstellt,
x für eine ganze Zahl von 2 bis 6 und
n für eine ganze Zahl von 2 bis 100 stehen,
in Mengen von 0,05 bis 15 Gew.-%, bezogen auf die jeweils eingesetzte Gewichtsmenge an Kautschuk.

2. Kautschukmischung gemäß Anspruch 1, dadurch gekennzeichnet, daß die Mischungen die schwefelhaltigen Polyester in Mengen von 0,1 bis 10 Gew.-%, bezogen auf die jeweils eingesetzte Gewichtsmenge an Kautschuk, enthalten.

3. Kautschukmischungen gemäß Ansprüchen 1 und 2, dadurch gekennzeichnet, daß die Mischungen Füllstoffe in Mengen von 10 bis 250 Gew.Teilen, sowie gegebenenfalls einen Vulkanisationsbeschleuniger und Schwefel in Mengen von 0,1 bis 10 Gew.-% und gegebenenfalls Weitere Hilfsmittel in Mengen von 0,1 bis 50 Gew`-%, bezogen auf den eingesetzten Kautschuk, jeweils enthalten.

## Claims

1. Rubber mixtures containing at least one rubber, one filler, optionally additional rubber auxiliaries and also at least one sulfurous polyester having structural units of the general formula (I) 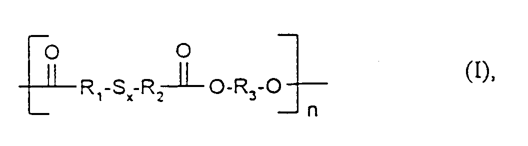 where
the residues R₁ and R₂ are the same or different and stand for unbranched or branched, optionally substituted C₁-C₁₂ alkylene residues,
R₃ represents an optionally substituted, unbranched or branched C₁-C₃₆ alkylene residue, which may optionally be interrupted by oxygen, sulfur or nitrogen atoms, or C₇-C₃₆ alkylarylene residue,
x stands for an integer from 2 to 6 and
n stands for an integer from 2 to 100,
in quantities from 0.05 to 15 wt-%, relative to the quantity by weight of rubber employed in each case.

2. Rubber mixture according to Claim 1, characterised in that the mixtures contain the sulfurous polyesters in quantities from 0.1 to 10 wt-%, relative to the quantity by weight of rubber employed in each case.

3. Rubber mixtures according to Claims 1 and 2, characterised in that the mixtures contain fillers in quantities from 10 to 250 parts by weight and also optionally a vulcanisation accelerator and sulfur in quantities from 0.1 to 10 wt-% and optionally additional auxiliary agents in quantities from 0.1 to 50 wt-%, relative to the amount of rubber employed in each case.

## Revendications

1. Compositions de caoutchouc contenant au moins un caoutchouc, une charge, éventuellement d'autres auxiliaires de caoutchouc ainsi qu'au moins un polyester contenant du soufre avec des unités dé structure de la formule générale(I). 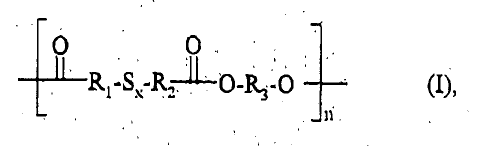
les restes R₁ et R₂ étant identiques ou différents et représentant des restes alkylène en C₁-C₁₂ non ramifiés ou ramifiés, éventuellement substitués,
R₃ représentant un reste alkylène en C₁-C₃₆ non ramifié ou ramifié, éventuellement substitue', qui peut être éventuellement interrompu par des atomes d'oxygène, de soufre ou d'azote, ou un reste alkylarylène en C₇-C_{36,}
x représentant un nombre entier de 2 à 6 et
n représentant un nombre entier de 2 à 100,
dans des quantités de 0,05 à 15% on poids, rapportés à la quantité massique de caoutchouc utilisée a chaque fois.

2. Compositions de caoutchouc selon la revendication 1, caractérisées en ce que les compositions contiennent les polyesters contenant du soufre dans des quantités de 0,1 à 10% en poids, rapportees à la quantite massique de caoutchouc utilisée à chaque fois.

3. Compositions de caoutchouc selon les revendications 1 et 2, caractérisées an ce que les compositions contiennent à chaque fois des charges dans des quantités de 10 à 250 parties en poids, ainsi qu'éventuellement un accélérateur de vulcanisation et du soufre dans des quantités de 0,1 à 10% en poids et éventuellement d'autres auxiliaires dans des quantités de 0,1 à 50% en poids, rapportés au caoutchouc utilisé.
